# EUROPÄISCHE PATENTSCHRIFT

(11) **EP 1 857 350 B1**
(45) Veröffentlichungstag und Bekanntmachung des Hinweises auf die Patenterteilung: **20.10.2010**
(21) Anmeldenummer: 07009679.7
(22) Anmeldetag: 15.05.2007
(51) Int. Cl.: B62D 25/06, B60J 1/20

(54) **Fahrzeugdach mit einem zumindest in Teilbereichen in seiner Transparenz veränderten Dachteil aus Kunststoff**
Vehicle roof with a roof part made of plastic and varied in transparency at least in some areas
Toit de véhicule doté d'au moins une partie de toit modifiée dans la zone partielle de sa transparence en plastique

(30) Priorität: 15.05.2006 DE 102006022922
(43) Veröffentlichungstag der Anmeldung: 21.11.2007
(73) Patentinhaber: Webasto AG, 82131 Stockdorf (DE)
(72) Erfinder: Pollak, Martin, D-82178 Puchheim (DE); Schwaighofer, Ralf, 83115 (DE); Oerke, Philipp, 81479 München (DE); Lang, Andreas, 82140 Olching (DE)

(56) Entgegenhaltungen:
- EP-A1- 1 068 969
- EP-A2- 1 479 499
- WO-A-03/033275
- DE-A1- 10 328 092
- DE-U1- 20 316 000

## Beschreibung

Die Erfindung betrifft ein Fahrzeugdach mit einem Dachteil aus Kunststoff, das zumindest in Teilbereichen mittels einer Folie in seiner Lichtdurchlässigkeit verändert ist, gemäß dem Oberbegriff des Patentanspruchs 1.

Ein gattungsgemäßes Fahrzeugdach ist aus der DE 103 28 092 A1 bekannt. Bei diesem ist eine große Dachplatte, die gleichzeitig die Seitenholme umfasst, im Bereich der Seitenholme mit einer nicht transparenten Klebefolie versehen oder durch eine Bedruckung an der Innenseite der Dachplatte nicht transparent ausgebildet.

Aus der DE 101 31 884 A1 ist ein Kunststoffdeckel eines Fahrzeugdachs bekannt, bei dem der Randbereich auf der Innenseite von einem nicht transparenten Kunststoffmaterial bedeckt ist, das gleichzeitig eine Versteifung bildet.

Aus der DE 101 15 568 B4 ist ein zweischaliges Dachelement eines Fahrzeugs bekannt, bei dem die Außenseite von einer mehrschichtigen Folie gebildet wird, die ganz außen liegend eine Deckschicht aus PMMA, daran nach innen anschließend eine Farbschicht und daran anschließend eine Folienträgerschicht aus ASA/PC aufweist, die für die Verbindung zu einem hinterspritzten Verstärkungsmaterial bildet. Die Folienträgerschicht kann auch eingefärbt sein, so dass eine separate Farbschicht dann entfällt.

Der Erfindung liegt die Aufgabe zugrunde, ein Fahrzeugdach zu schaffen, bei dem ein aus Kunststoff bestehendes Dachteil sich besser in das Gesamtbild des Fahrzeugs einfügt.

Diese Aufgabe wird erfindungsgemäß durch die Merkmale des Patentanspruchs 1 gelöst. Vorteilhafte Ausgestaltungen der Erfindung sind in den Unteransprüchen angegeben.

Die Erfindung sieht im Kern vor, dass in das Dachteil aus Polycarbonat zumindest partiell jedoch bevorzugt vollflächig eine Folie integriert ist, die die Farbe des Fahrzeugs aufweist. Erfindungsgemäß ist vorgesehen, dass die Folie zwischen zwei das Dachteil bildende Schichten aus Kunststoff eingebettet ist. Dadurch stellt sich bei einer transparenten oberen Kunststoffschicht eine interessante optische Tiefenwirkung der Farbe des Dachteils ein.

Die Folie ist mit einem aus Polycarbonat (PC) bestehenden Dachteil verbunden. Sie wird mit dem Polycarbonat (PC) hinterspritzt. Die Folie selbst besteht aus einem Polycarbonat (PC), einem Polycarbonat-Blend, wie Acrylnitril-Butadien-Styrol-Polycarbonat-Blend (ABS-PC), einem PC-Copolymer oder einem anderen PC-kompatiblen Material, wie Polyethylenterephthalat (PET) oder Polymethylmethacrylat (PMMA).

Die Folie ist bevorzugt komplett in der Fahrzeugfarbe eingefärbt; sie kann jedoch auch an ihrer Oberseite oder Unterseite in Fahrzeugfarbe lackiert oder bedruckt sein. Es können optional Flächenanteile vorgesehen sein, bei denen die Farbschicht so dünn ist, dass eine Teiltransparenz entsteht, die zum Fahrzeuginnenraum hin einen Lichtdurchtritt ermöglicht. Die Übergänge von einem opaken zu einem transparenten oder teiltransparenten Flächenbereich des Dachteils können fließend wie Farbverläufe gestaltet werden.

Nachfolgend wird ein erfindungsgemäßes Fahrzeugdach unter Bezugnahme auf die Zeichnung näher erläutert. Es zeigt:
- Fig. 1: eine schematische perspektivische Ansicht auf ein Fahrzeugdach in geschlossenem Zustand;
- Fig. 2: einen schematischen Teilquerschnitt einer nicht zur Erfindung gehörenden ersten Ausführungsform des Fahrzeugdachs mit einer an der Oberseite angeordneten Folie;
- Fig. 3: einen schematischen Teilquerschnitt einer erfindungsgemäßen Ausführungsform des Fahrzeugdachs mit einer zwischen zwei Kunststoffschichten eingebetteten Folie; und
- Fig. 4: einen schematischen Teilquerschnitt einer weiteren nicht zur Erfindung gehörenden Ausführungsform des Fahrzeugdachs mit einer unterhalb einer Kunststoffschicht angeordneten Folie.

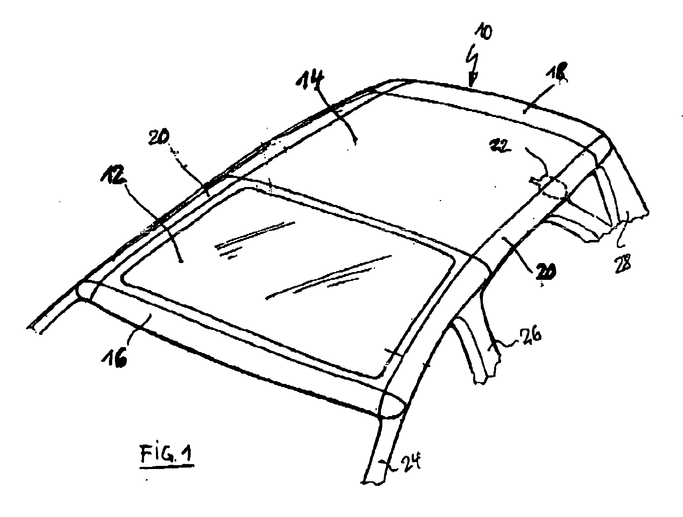

Das in Fig. 1 gezeigte Fahrzeugdach 10 setzt sich zusammen aus einem vorderen Dachteil 12, einem hinteren Dachteil 14, einem vorderen Querholm 16, einem hinteren Querholm 18 und zu beiden Seiten angeordneten Seitenholmen 20. Die Seitenholme 20 können als separate Bauteile mit der A-Säule 24, der B-Säule 26 und der C- beziehungsweise D-Säule 28 verbunden sein, an denen die Dachteile 12 bzw. 14 fest oder bewegbar gelagert sind. Es ist jedoch ebenso möglich, tragende Holmstrukturen 22 unmittelbar an den seitlichen Bereichen der Dachteile 12 bzw. 14 mit anzuformen. Die Dachteile 12 bzw. 14 sind bevorzugt Bestandteile eines RHT (Retractable Hardtop), also eines Festelement-Cabriolets, bei dem die in sich steifen Dachtelle zur Freigabe einer Cabrio-artigen Dachöffnung mittels einer Mechanik in einen Stauraum im hinteren Bereich des Fahrzeugs bewegt werden können.

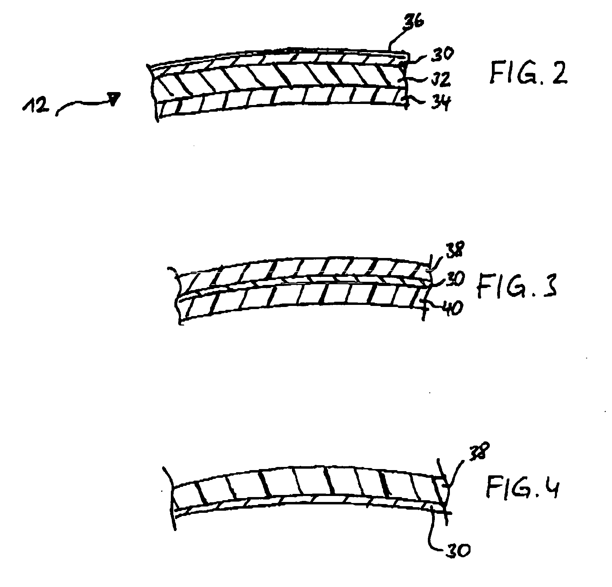

Die Fign. 2 bis 4 zeigen drei unterschiedliche Ausführungsformen eines Dachteils. Exemplarisch ist dort das Dachteil 12 in einem Teilquerschnitt zur Verdeutlichung des Schichtenaufbaus dargestellt. Das Dachteil 14 und die Holme 16, 18, 20 können in gleicher Weise aufgebaut sein.

Allen drei Ausführungsbeispielen gemeinsam ist, dass die Dachteile 12 bzw. 14, vorzugsweise mit den Holmen 16, 18, 20, mittels einer in der Fahrzeugfarbe, beziehungsweise der Farbe des Fahrzeugdachs eingefärbten Folie 30 an die Farbe des Fahrzeugs bzw. des Fahrzeugdachs angepasst sind. Die Dachteile 12 bzw. 14 können daher beim Fahrzeugzulieferer für den Einbau am Band beim Fahrzeughersteller fertig vorbereitet werden. Die Dachteile 12 bzw. 14 fügen sich dadurch harmonisch in das Gesamtbild des Fahrzeugs ein. Ein nachträgliches Lackieren beim Fahrzeughersteller ist nicht mehr erforderlich.

Bei der nicht zur Erfindung gehörenden Ausführungsform gemäß Figur 2 ist die Folie 30 an der Oberseite des Dachteils 12 angeordnet. Darüber ist lediglich noch eine dünne kratzfeste Lackschicht 36 aus einem transparenten Lack angeordnet. Die Folie 30 ist mit einer ersten Kunststoffschicht 32 aus Polycarbonat hinterspritzt. Zur zusätzlichen Versteifung ist optional eine weitere Kunststoffschicht 34, bevorzugt ebenfalls aus Polycarbonat, an der Unterseite des Dachteils 12 angeordnet.

Die Folie 30 besteht aus einem Polycarbonat, (PC), einem Polycarbonat-Blend, wie Acrylnittil-Butadien-Styrol-Polycarbonat-Blend (ABS-PC), einem PC-Copolymer oder einem anderen PC-kompatiblen Material, wie Polyethylenterephthalat (PET) oder Polymethylmethacrylat (PMMA). Sie ist entweder komplett in Fahrzeugfarbe durchgefärbt oder - vor dem Hinterspritzen oder dem Aufbringen der kratzfesten Lackschicht - an einer ihrer Seiten, bevorzugt an ihrer Oberseite mit einer Lackschicht in Fahrzeugfarbe lackiert oder durch Bedruckung in Fahrzeugfarbe bedruckt. Dies gilt auch für die folgenden Ausführungsbeispiele gemäß den Fign. 3 und 4.

Bei der erfindungsgemäßen Ausführungsform gemäß Figur 3 ist die Folie 30 zwischen zwei Kunststoffschichten 38 beziehungsweise 40 eingebettet. Zumindest die obere Kunststoffschicht 38 ist transparent ausgebildet. Bevorzugt sind beide Kunststoffschichten 38 bzw. 40 aus Polycarbonat hergestellt und durch Spritzen auf die Folie 30 aufgebracht. Optional ist auf der Außenseite der äußeren Kunststoffschicht 38 noch eine kratzfeste Lackschicht 36, wie im ersten Ausführungsbeispiel gemäß Figur 2 vorgesehen. Durch die Anordnung der Folie 30 unterhalb der Kunststoffschicht 38 wird die Einfärbung der Folie 30 durch das darüber liegende transparente Material der Kunststoffschicht 38 mit einer gewissen Tiefenwirkung wahrgenommen. Hierdurch kann ein besonderer gewünschter optischer Effekt bei der Gestaltung des Fahrzeugdachs erzielt werden.

Das gleiche gilt für das nicht zur Erfindung gehörende Ausführungsbeispiel gemäß Figur 4, bei dem die Folie 30 unterhalb mindestens einer oberen transparenten Kunststoffschicht 38 angeordnet ist. Auch für dieses Ausführungsbeispiel gilt, dass oberhalb der Kunststoffschicht 38 optional wieder eine kratzfeste Lackschicht 36 angeordnet sein kann. Ferner können auch mehrere transparente Kunststoffschichten über der Folie 30 angeordnet sein. Bevorzugt bestehen auch hier alle Kunststoffschichten 38 aus Polycarbonat.

Durch die Erfindung wird eine einfache kostengünstige Möglichkeit geschaffen, ein Fahrzeugdachteil oder ein gesamtes Dachmodul aus Kunststoff gegebenenfalls mit daran integrierten Holmen an das optische Erscheinungsbild eines Fahrzeugs anzupassen. Die Oberfläche ist dabei hoch glänzend (glazing), wodurch die Farbe der Folie sehr gut zur Geltung kommt. Durch die Integration der Farbe in die Folie ist diese hervorragend vor Abnutzung, Verwitterung oder mechanischer Beschädigung durch Kratzer oder Hagelschlag geschützt. Auch wenn vorstehend von Fahrzeugdachteilen gesprochen wird, ist für den Fachmann klar, dass sich die Erfindung auch für andere außenliegende Karosserieteile, wie Türen, Motorhaube oder Heckklappe von Fahrzeugen hervorragend eignet.

### Bezugszeichenliste

- 10: Fahrzeugdach
- 12: Dachteil
- 14: Dachteil
- 16: (vorderer) Querholm
- 18: (hinterer) Querholm
- 20: Seitenholm
- 22: Holmstruktur
- 24: A-Säule
- 26: B-Säule
- 28: C-Säule
- 30: Folie
- 32: Kunststoffschicht
- 34: Kunststoffschicht
- 36: (kratzfeste) Lackschicht
- 38: Kunststoffschicht
- 40: Kunststoffschicht

## Patentansprüche

1. Fahrzeugdach (10) mit einem Dachteil (12, 14) aus Kunststoff, das zumindest in Teilbereichen mittels einer Folie (30) in seiner Lichtdurchlässigkeit verändert ist, **dadurch gekennzeichnet, dass** die Folie (30) in der Farbe des Fahrzeugs eingefärbt oder farbig bedruckt oder lackiert ist, zwischen zwei Schichten (38, 40) aus Kunststoff eingebettet ist, von denen zumindest eine Schicht aus Polycarbonat besteht und von denen zumindest die äußere Schicht (38) transparent ist, und durch Hinterspritzen mit der zumindest einen Polycarbonatschicht, als Trägerschicht ausgebildet, verbunden ist.

2. Fahrzeugdach nach einem der vorhergehenden Ansprüche, **dadurch gekennzeichnet, dass** die Folie (30) aus einem Polycarbonat (PC), einem Polycarbonat-Blend, wie Acrylnitril-Butadien-Styrol-Polycarbonat-Blend (ABS-PC), einem PC-Copolymer oder einem anderen PC-kompatiblen Material, wie Polyethylenterephthalat (PET) oder Polymethylmethacrylat (PMMA) besteht.

3. Fehrzeugdach nach einem der vorhergehenden Ansprüche, **dadurch gekennzeichnet, dass** das Dachteil (12, 14) an seiner Außenseite mit einer kratzfesten Lackschicht (36) versehen ist.

4. Fahrzeugdach nach einem der vorhergehenden Ansprüche, **dadurch gekennzeichnet, dass** durch die Einfärbung der Folie (30) eine komplette Lichtundurchlässigkeit des Dachteils (12, 14) entsteht.

5. Fahrzeugdach nach einem der Ansprüche 1 bis 3, **dadurch gekennzeichnet, dass** durch die Einfärbung der Folie (30) zumindest in Teilbereichen des Dachteils (12, 14) eine Teiltransparenz entsteht.

6. Fahrzeugdach nach einem der vorhergehenden Ansprüche, **dadurch gekennzeichnet, dass** das Dachteil (12, 14) auch tragende Strukturen, wie Seitenholme (20) und/oder Querholme (16, 18) umfasst.

7. Fahrzeugdach nach einem der vorhergehenden Ansprüche, **dadurch gekennzeichnet, dass** das Dachteil (12, 14) einen Teil eines Festelement-Cabriolets bildet.

## Claims

1. Vehicle roof (10) with a roof part (12, 14) made of plastic and varied in the light transmittance thereof at least in some areas by means of a film (30), **characterized in that** the film (30) is coloured in the colour of the vehicle or is printed or painted in colour, and is embedded between two layers (38, 40) made of plastic, of which at least one layer is composed of polycarbonate and of which at least the outer layer (38) is transparent, and is connected by film insert moulding to the at least one polycarbonate layer, which is designed as a carrier layer.

2. Vehicle roof according to Claim 1, **characterized in that** the film (30) is composed of a polycarbonate (PC), a polycarbonate blend, such as acrylonitrile-butadiene-styrene-polycarbonate blend (ABS-PC), a PC copolymer or another PC-compatible material, such as polyethylene terephthalate (PET) or polymethylmethacrylate (PMMA).

3. Vehicle roof according to one of the preceding claims, **characterized in that** the outside of the roof part (12, 14) is provided with a scratchproof paint layer (36).

4. Vehicle roof according to one of the preceding claims, **characterized in that** full opacity of the roof part (12, 14) is produced by colouring the film (30).

5. Vehicle roof according to one of Claims 1 to 3, **characterized in that** partial transparency is produced at least in some areas of the roof part (12, 14) by colouring the film (30).

6. Vehicle roof according to one of the preceding claims, **characterized in that** the roof part (12, 14) also comprises supporting structures, such as side struts (20) and/or transverse struts (16, 18).

7. Vehicle roof according to one of the preceding claims, **characterized in that** the roof part (12, 14) forms part of a fixed-element cabriolet.

## Revendications

1. Toit de véhicule (10) doté d'une partie de toit (12, 14) en matière plastique, qui est modifiée au moins dans des zones partielles dans sa transparence au moyen d'un film (30), **caractérisé en ce que** le film (30) est teinté dans la couleur du véhicule ou imprimé en couleurs ou peint, **en ce qu'**il est incorporé entre deux couches (38, 40) en matière plastique, dont au moins une couche consiste dans du polycarbonate et dont au moins la couche extérieure (38) est transparente et **en ce que**, conçu en tant que couche porteuse, il est relié par rétro-injection avec ladite au moins une couche en polycarbonate.

2. Toit de véhicule selon la revendication 1, **caractérisé en ce que** le film (30) consiste dans un polycarbonate (PC), dans un mélange de polycarbonate, comme un mélange polycarbonate d'acrylonitrile-butadiène-styrène (PC ABS), dans un copolymère de PC ou dans une autre matière compatible avec du PC, comme du polyéthylène téréphtalate (PET) ou du polyméthylméthacrylate (PMMA).

3. Toit de véhicule selon l'une quelconque des revendications précédentes, **caractérisé en ce que** la partie de toit (12, 14) est munie sur sa face extérieure d'une couche de peinture (36) anti-rayures.

4. Toit de véhicule selon l'une quelconque des revendications précédentes, **caractérisé en ce que** du fait de la teinte du film (30), il résulte une totale opacité de la partie de toit (12, 14).

5. Toit de véhicule selon l'une quelconque des revendications 1 à 3, **caractérisé en ce que** du fait de la teinte du film (30), il résulte une transparence partielle au moins dans des zones partielles de la partie de toit (12, 14).

6. Toit de véhicule selon l'une quelconque des revendications précédentes, **caractérisé en ce que** la partie de toit (12, 14) comprend également des structures porteuses, comme des longerons latéraux (20) et/ou des longerons transversaux (16, 18).

7. Toit de véhicule selon l'une quelconque des revendications précédentes, **caractérisé en ce que** la partie de toit (12, 14) forme une partie d'un cabriolet à élément fixe.
